# EUROPÄISCHE PATENTSCHRIFT

(11) **EP 0 982 223 B1**
(45) Veröffentlichungstag und Bekanntmachung des Hinweises auf die Patenterteilung: **15.09.2004**
(21) Anmeldenummer: 99113233.3
(22) Anmeldetag: 08.07.1999
(51) Int. Cl.: B62D 49/06

(54) **Kleinschlepper insbesondere Rasentraktor**
Compact tractor particularly lawn tractor
Petit tracteur en particulier tracteur-tondeuse

(30) Priorität: 28.08.1998 DE 29815415 U
(43) Veröffentlichungstag der Anmeldung: 01.03.2000
(73) Patentinhaber: Julius Tielbürger GmbH & Co. KG, D-32351 Stemwede-Oppenwehe (DE)
(72) Erfinder: Tielbürger, Dirk, 32369 Rahden (DE)
(74) Vertreter: Stracke, Alexander, Dipl.-Ing.

(56) Entgegenhaltungen:
- FR-A- 1 178 177
- US-A- 3 586 246
- DATABASE WPI Section PQ, Week 199631 Derwent Publications Ltd., London, GB; Class P11, AN 1996-303609 XP002221598 -& JP 08 130918 A (SEIREI IND CO LTD), 28. Mai 1996 (1996-05-28)

## Beschreibung

Die Erfindung betrifft einen Kleinschlepper, insbesondere Rasentraktor, der an der Frontseite mittels einer Kupplungsvorrichtung mit einem Streugerät gekuppelt ist, welches mit einem Trichter zur Aufnahme des Streugutes, einer unterhalb des Trichters um eine vertikale Achse rotierend antreibbaren Streuscheibe und einer oberhalb der Streuscheibe liegenden Dosier- und Richtungsstelleinrichtung für das Streugut ausgerüstet ist.

Der in Frage kommende Kleinschlepper bzw. Rasentraktor kann vielseitig eingesetzt werden. Mit dem Streugerät wird bevorzugt ein Düngemittel gestreut. Der Kleinschlepper bzw. Rasentraktor wird bevorzugt zur Pflege von öffentlichen Grünanlagen, Gärten und dergleichen verwendet.

Aus der gattungsbildenden JP-A-8130918 ist ein Schlepper bekannt, an dessen Frontseite mittels einer Schnellkupplungsvorrichtung ein Anbaugerät angeschlossen ist. Daraus ergibt sich der große Vorteil, dass das Anbaugerät im Blickfeld des Fahrers liegt, so dass er den durchzuführenden Vorgang ohne besonderen Aufwand stets kontrollieren kann, selbst dann wenn er seine Aufmerksamkeit auf die Vorwärtsfahrt richtet, da er in Parks oder Gärten Bepflanzungen, Bäume oder dergleichen umfahren muß.

Aus der FR-A-1178177 ist ein Streugerät bekannt, welches mit einem Trichter zur Aufnahme des Streugutes und einer unterhalb des Trichters gelagerte Streuscheibe versehen ist, die um eine vertikale Achse rotierend angetrieben werden kann. Außerdem ist das Streugerät mit einer oberhalb der Streuscheibe liegenden Dosier- und Richtungsstelleinrichtung für das Streugut ausgerüstet, so dass je nach den Erfordernissen das Streugut über die gesamte Streubreite ausgestreut wird, dass heißt links und rechts des Kleinschleppers oder aber durch die Richtungsstelleinrichtung kann das Streugut wahlweise an der linken oder an der rechten Seite gestreut werden. Dies ist beispielsweise erforderlich, wenn beim Mähen eines Rasens gleichzeitig ein Düngemittel ausgestreut wird und beispielsweise dicht an einer Bepflanzung vorbeigefahren wird, die nicht gedüngt werden soll. Im praktischen Einsatz ist insbesondere ein häufiges umstellen der Richtungsstelleinrichtung notwendig. Die vorbekannte Streuvorrichtung erfüllt die gestellten Anforderungen nicht.

Der Erfindung liegt die Aufgabe zugrunde, einen Kleinschlepper, insbesondere einen Rasentraktor so zu gestalten, dass der Fahrer den Streuvorgang beobachten und steuern kann.

Die gestellte Aufgabe wird dadurch gelöst, dass der Trichter des Streugerätes zwei außerhalb der Drehachse des Streutellers liegende Auslauföffnungen aufweist und dass die Dosier- und Richtungsstelleinrichtung aus einer oberhalb der Streuscheibe liegenden schwenkbaren Platte besteht, die um eine außerhalb der Drehachse des Streutellers liegende Achse schwenkbar ist und mit Bohrungen versehen ist, die wahlweise in eine korrespondierende Stellung zu einer oder zu beiden Auslauföffnungen des Trichters bringbar sind.

Durch die mit den Bohrungen versehene Platte ist es möglich, dass das Streugut durch beide Auslauföffnungen aus dem Trichter fließt und dann von der Streuscheibe verteilt wird. In diesem Falle wird das Streugut über die volle Streubreite verteilt. Die Platte kann jedoch auch so geschwenkt werden, dass eine der beiden Auslauföffnungen verschlossen wird. Je nach dem welche der beiden Auslauföffnungen noch offen ist, wird das Streugut an der linken Seite oder an der rechten Seite des Kleinschleppers verteilt.

Über eine entsprechende Stelleinrichtung, vorzugsweise eine mechanische Stelleinrichtung, kann der Fahrer des Kleinschleppers jederzeit ohne großen Aufwand die Art des Streuens bestimmen. Dies lässt sich in einfachster Weise konstruktiv umsetzen, wenn die Auslauföffnungen des Trichters auf einem zur Drehachse der Streuscheibe konzentrischen Kreis im Winkelabstand zueinander liegen und die Platte mit vier auf einem entsprechenden Kreisbogen im Winkelabstand zueinander stehenden Bohrungen versehen ist. Die Platte kann dann in drei verschiedene Stellungen gegenüber den Auslauföffnungen des Trichters verstellt werden, so dass sich die genannten drei Streuarten ergeben. Dazu ist die Platte zweckmäßigerweise segmentförmig gestaltet, wobei die mittleren Bohrungen im gleichen Winkelabstand zueinander stehen wie die Auslauföffnungen des Trichters. Wenn das Streugut über die gesamte Breite verteilt werden soll, steht dann auch die Platte in einer mittleren Stellung. Wird durch Verschwenken dieser Platte eine der beiden Auslauföffnungen des Trichters verschlossen, wird in Abhängigkeit davon das Streugut links oder rechts verteilt.

Dabei ist es dann vorteilhaft, wenn die Abstände der beiden äußeren Bohrungen zu den zugewandten mittleren Bohrungen geringer sind als der Abstand der mittleren Bohrungen zueinander. Es ergeben sich dann relativ kleine Schwenkwinkel. Die Anordnung sollte so getroffen werden, daß der Fahrer ein Bedienelement nach links verschwenkt, wenn die linke Seite und das Bedienelement nach rechts verschwenkt, wenn die rechte Seite gestreut werden soll. In der mittleren Stellung des Bedienelementes wird dann das Streugut über die gesamte Streubreite verteilt. Die jeweilige Streuart wird erreicht, da das Streugut je nach Stellung der Platte in zwei Strömen auf den Streuteller trifft oder bei einer einseitigen Streuung nur ein Volumenstrom benutzt wird.

In weiterer Ausgestaltung ist vorgesehen, daß zwischen der als Platte ausgebildeten Dosierund Richtungsstelleinrichtung ein Schließblech beweglich gelagert ist. Mittels dieses Schließbleches können die beiden Auslauföffnungen des Trichters verschlossen werden. Dadurch wird dann der Streuvorgang beendet bzw. unterbrochen. Dieses Schließblech ist zweckmäßigerweise um eine zur Schwenkachse der Platte fluchtende Achse schwenkbar. Das Schließblech ist in bevorzugter Ausführung mit zwei Löchern versehen, die der Anordnung der beiden Auslauföffnungen entsprechen. In der Offenstellung des Schließbleches liegen dann die Auslauföffnungen des Fülltrichters und die beiden Löcher des Schließbleches deckungsgleich aufeinander. Es kann dann wiederum durch die Platte bestimmt werden, ob nur eine Auslauföffnung oder beide Auslauföffnungen offengehalten werden sollen.

Eine einfache Bedienung ergibt sich, wenn das Streugerät mittels der Kupplungsvorrichtung in eine angehobene Ruhestellung und in eine abgesenkte Streustellung bringbar ist, und daß das Schließblech mit der Kupplungsvorrichtung derart verbunden ist, daß bei angehobenem Streugerät das Schließblech die Auslauföffnungen des Trichters verschließt und in der abgesenkten Stellung freigibt.

In einfachster Weise ist die Kupplungsvorrichtung nach Art einer Gelenkkette ausgebildet, wobei an einem Lenker eine Koppelstange angelenkt ist, deren anderes Ende an dem Schließblech außerhalb seiner Schwenkachse angelenkt ist. Durch diese Zwangskopplung wird automatisch beim Anheben bzw. Absenken des Streugerätes das Schließblech in die jeweilige Stellung geschwenkt. Die die Dosier- und Richtungsstelleinrichtung bildende Platte kann beim Streuen des Streugutes in eine solche Stellung gebracht werden, daß die Auslauföffnungen des Fülltrichters zum Teil abgedeckt werden. Dadurch läßt sich der Volumenstrom regulieren. Alternativ oder zusätzlich ist jedoch auch noch vorgesehen, daß die Länge der Koppelstange für das Schließblech derart einstellbar ist, daß in der Streustellung des Streugerätes ein bestimmter Querschnitt der Auslauföffnungen des Trichters zur Dosierung des Streugutes freigegeben ist. Dadurch wird ein stets gleichbleibender Querschnitt in der Streustellung des Streugerätes freigegeben. Durch Änderung der Länge der Koppelstange läßt sich jedoch dieser Querschnitt im Bedarfsfalle ändern.

Der Antrieb der Streuscheibe erfolgt zweckmäßigerweise mittels eines Riementriebes. Dabei liegt die getriebene Scheibe fluchtend zur Streuscheibe. Die angetriebene Scheibe des Riementriebs wird vom Kleinschlepper aus angetrieben. Durch diesen Antrieb ist die Drehzahl der Streuscheibe unabhängig von der Fahrgeschwindigkeit des Kleinschleppers. Sie wird durch die Drehzahl des Verbrennungsmotors des Kleinschleppers bestimmt. Wenn dieser mit gleichbleibender Drehzahl gefahren wird, kommt es nicht zum Streuen von verdichteten Bereichen.

Anhand der beiliegenden Zeichnungen wird die Erfindung noch näher erläutert.

Es zeigen:
- Figur 1: ein Streugerät eines erfindungsgemäßen Rasentraktors im Aufriß, ein schematisch,
- Figur 2: das Streugerät in einer Draufsicht, ebenfalls rein schematisch,
- Figur 3: die als Platte ausgebildete Dosier- und Richtungsstelleinrichtung als Einzelheit,
- Figur 4: das Schließblech als Einzelheit,
- Figur 5: die Streuscheibe mit der darüber angeordneten Platte und dem Schließblech in einer Draufsicht und
- Figur 6: eine der Figur 5 entsprechende Stirnansicht.

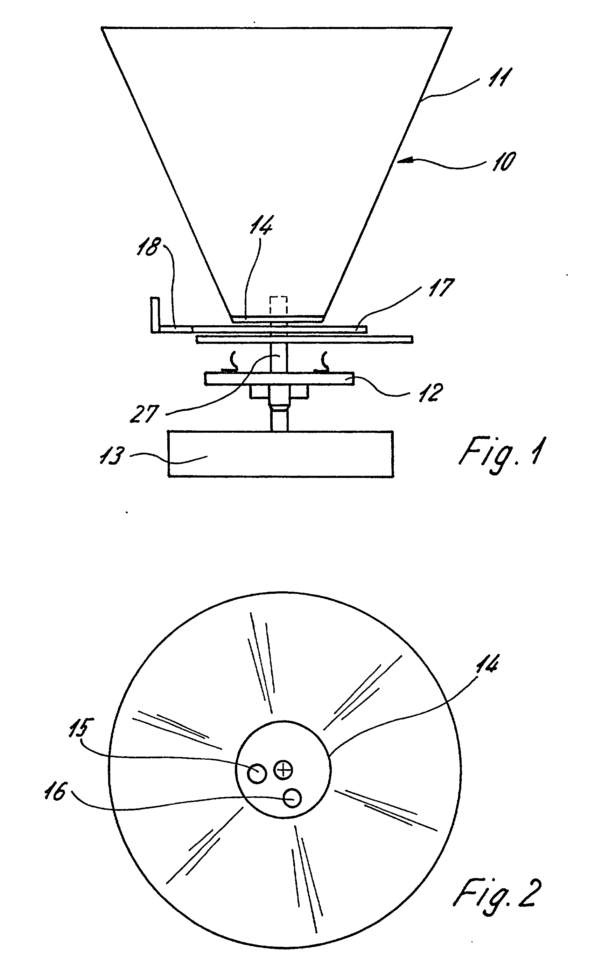

Das in den Fig. 1 und 2 dargestellte Streugerät 10 wird frontseitig an einen nicht dargestellten Kleinschlepper oder einen Rasentraktor angebaut. Die aus einer Gelenkkette bestehende Kupplungsvorrichtung ist der Einfachheit halber nicht dargestellt. Das Streugerät 10 ist mit einem Trichter 11 ausgestattet, in den das Streugut eingeschüttet wird. Das Streugerät 10 ist außerdem mit einer unterhalb des Trichters liegenden Streuscheibe 12 ausgestattet, die mit zwei Streuprofilen bestückt ist, die an der dem Trichter 11 zugewandten Seite liegen. Unterhalb der Streuscheibe 12 liegt ein nicht näher dargestelltes Getriebe 13 zum Antrieb der Streuscheibe 12. Der der Streuscheibe zugeordnete untere Boden 14 des Trichters 11 ist mit zwei Auslauföffnungen 15, 16 versehen, die auf einem zur Drehachse der Streuscheibe 12 konzentrischen Kreis liegen, die jedoch im Winkelabstand zueinander angeordnet sind. Zwischen der Streuscheibe 12 und dem Boden 14 liegt noch eine Platte 17, die eine Dosier- und Richtungsstelleinrichtung für das Streugut bildet, sowie ein Schließblech 18, wobei das Schließblech 18 zwischen der Platte 17 und dem Boden 14 des Trichters 11 liegt.

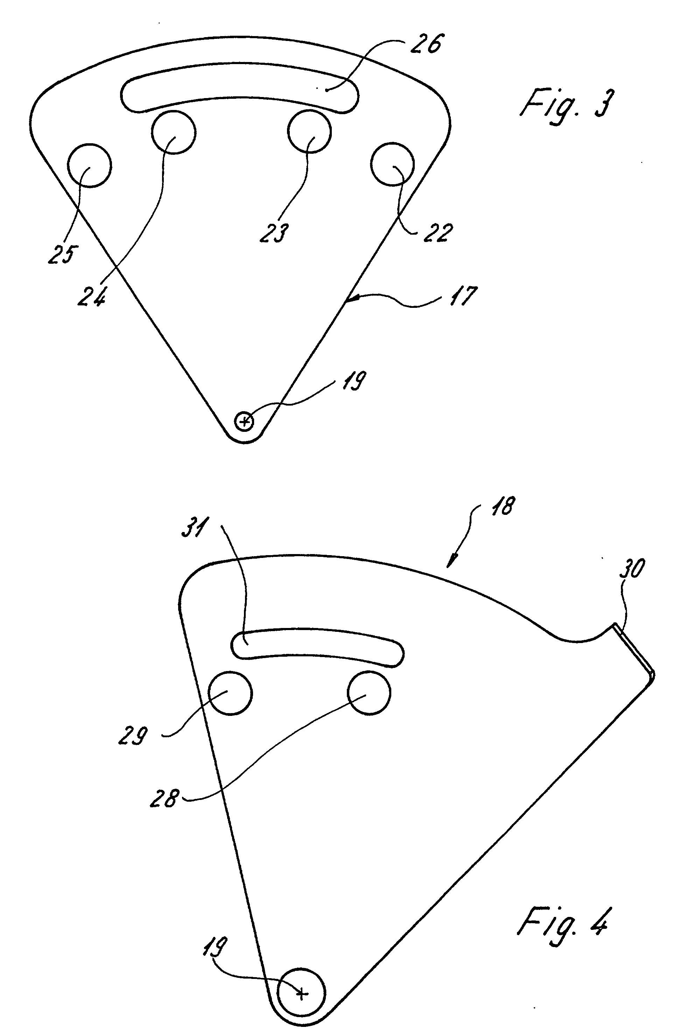

Die Fig. 3 zeigt die Platte 17 als Einzelheit. Demnach ist sie segmentförmig ausgebildet und um eine Achse 19 mittels eines nicht dargestellten Hebels verschwenkbar. Dieser Hebel ist vom Fahrer des Kleinschleppers aus zu erreichen. Auf einem zur Achse 19 konzentrischen Kreisbogen liegen vier Bohrungen 22, 23, 24, 25. Der Winkelabstand der beiden mittleren Bohrungen 23, 24 entspricht dem Winkelabstand der Auslauföffnungen 15, 16. Die Achse 19 liegt außerhalb bzw. im Versatz zur Drehachse der Streuscheibe 12, so daß die mittleren Bohrungen 23, 24 deckungsgleich zu den Auslauföffnungen 15, 16 stehen, wenn die Platte 17 in die entsprechende Stellung gebracht wird. In dieser Stellung wird die volle Streubreite ausgenutzt, da beide Auslauföffnungen 15, 16 frei sind. Zur Dosierung des Volumenstromes kann die Platte 17 jedoch so geschwenkt werden, daß die Auslauföffnungen 15, 16 zum Teil abgedeckt sind. Soll jedoch das Streugut nur an der linken oder rechten Seite des Schleppers gestreut werden, wird die Platte 17 so geschwenkt, daß entweder die Bohrung 22 oder die Bohrung 25 die entsprechende Auslauföffnung 15 bzw. 16 ganz oder teilweise freigibt. Die Platte 17 ist außerdem noch mit einem Langloch 26 versehen, durch die die Antriebswelle 27 für die Streuscheibe 12 geführt ist.

Das Schließblech 18 zeigt die Fig. 4 als Einzelheit. Es ist ebenfalls segmentförmig gestaltet und mit zwei Bohrungen 28, 29 versehen, die im gleichen Winkelabstand zueinander stehen wie die Bohrungen 23, 24 der Platte 17. Das Schließblech 18 ist um die gleiche Achse 19 wie die Platte 17 schwenkbar. Demzufolge müssen auch die Bohrungen 28, 29 auf dem gleichen Kreisbogen liegen. An der der Achse 19 gegenüberliegenden Seite ist das Schließblech 18 mit einem Winkel 30 versehen, um eine nicht dargestellte Koppelstange daran anzuschließen. Diese Koppelstange ist mit dem anderen Ende an einem Lenker der Kupplungsvorrichtung angelenkt. Das Schließblech 18 ist ebenfalls mit einem Langloch 31 versehen.

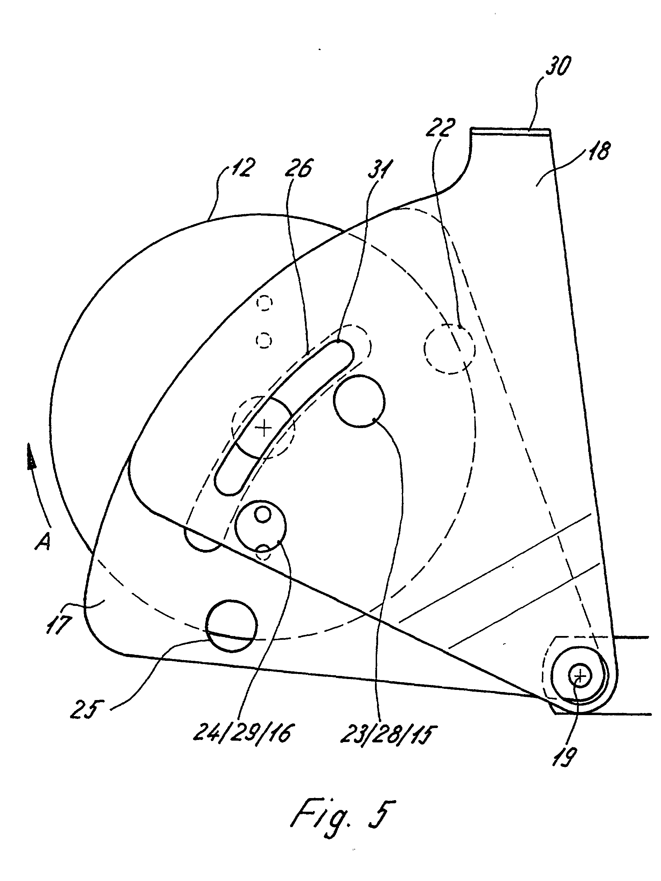

Die Fig. 5 zeigt die Funktion der die Dosier- und Richtungsstelleinrichtung bildenden Platte 17 in Kombination mit dem Schließblech 18 sowie den beiden Auslauföffnungen 15, 16 des Trichters 11. In der gezeichneten Stellung liegt die Bohrung 23 der Platte 17 deckungsgleich unter der Bohrung 28 des Schließbleches 18 und auch deckungsgleich unter der Auslauföffnung 15 des Trichters 11. Außerdem liegt die Bohrung 24 der Platte 17 deckungsgleich unter der Bohrung 29 des Schließbleches 18 sowie unter der Auslauföffnung 16 des Trichters 11. Die Drehrichtung der Streuscheibe 12 ist durch den Pfeil A gekennzeichnet. In dieser Stellung strömt aus beiden Auslauföffnungen 15, 16 Streugut, so daß es über die gesamte Streubreite verteilt wird. Durch Schwenken der Platte 17 entgegen dem Uhrzeigersinn gemäß der Darstellung nach der Fig. 5 kommt die Bohrung 22 der Platte 17 unter die Bohrung 28 des Schließbleches 18. Die Auslauföffnung 15 bleibt frei, während die Auslauföffnung 16 nunmehr verschlossen ist. Das Streugut wird dann nur noch an der linken Seite verteilt, da es entsprechend auf die Streuscheibe 12 gelangt. Wird von der gezeichneten Stellung für die volle Streubreite die Platte 17 im Uhrzeigersinn geschwenkt, kommt die Bohrung 25 der Platte 17 unter die Bohrung 29 des Schließbleches 18 und unter die Auslauföffnung 16. In diesem Fall wird durch den an anderer Stelle abgelegten Volumenstrom die rechte Seite gestreut.

Die angehobene Stellung des Streugerätes 10 ist die Außerbetriebsstellung bzw. Ruhestellung. In dieser Stellung wird durch die Anlenkung des Schließbleches 18 an einen Lenker der Gelenkkette das Schließblech 18 so verschwenkt, daß die beiden Auslauföffnungen 15, 16 verschlossen sind. Wird jedoch vom Fahrer des Kleinschleppers das Streugerät 10 abgesenkt, gelangen die beiden Bohrungen 28, 29 unter die Auslauföffnungen 15, 16 des Trichters 11, so daß je nach Stellung der Platte 17 der Volumenstrom erfolgt.

In nicht dargestellter Weise kann der an das Schließblech 18 angeschlossene Lenker in seiner Länge verstellt werden. In der Freigabestellung der Auslauföffnungen 15, 16 kann dann noch ein Teil der Auslauföffnungen 15, 16 abgedeckt werden, so daß dadurch der Volumenstrom regelbar ist. Durch Änderung der Länge des Lenkers bzw. der Koppelstange kann der freie Querschnitt der Auslauföffnungen 15, 16 zur Veränderung des Volumenstromes eingestellt werden.

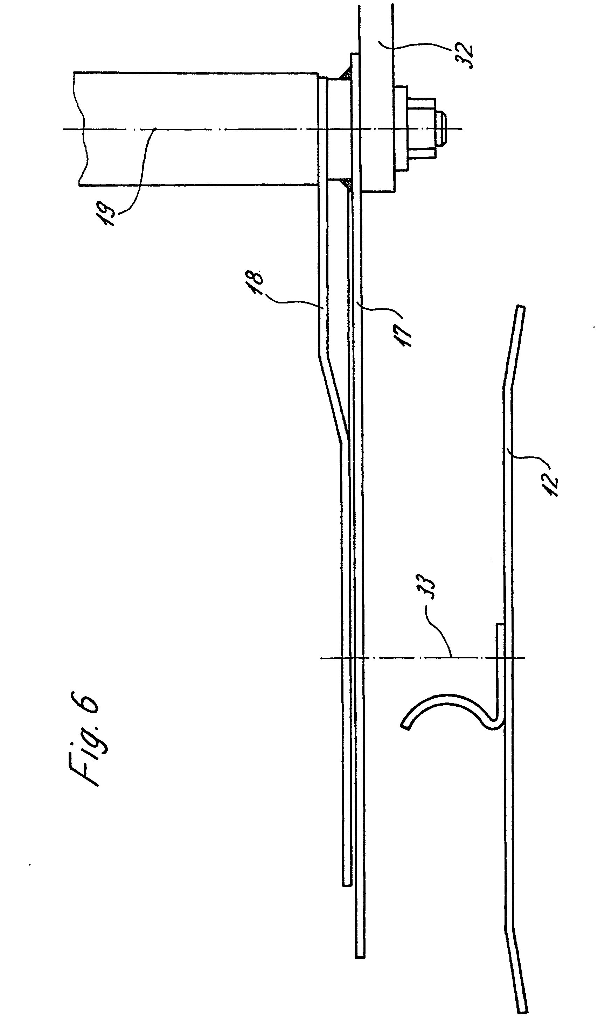

Die Fig. 6 zeigt, daß die Drehachse 33 der Streuscheibe 12 im Versatz zur Achse 19 als Schwenkachse für die Platte 17 und für das Schließblech 18 liegt. Außerdem zeigt die Fig. 6, daß das Schließblech 18 im der Achse 19 abgewandten Bereich dicht an der Platte 17 liegt. Das Schließblech 18 ist im der Achse 19 zugeordneten Bereich gekröpft. Durch das Bezugszeichen 32 ist noch ein Festlager gekennzeichnet, um die Platte 17 und das Schließblech 18 zu lagern.

Die Erfindung ist nicht auf das dargestellte Ausführungsbeispiel beschränkt. Wesentlich sind die wahlweise freigegebenen Auslauföffnungen 15, 16 im Boden 14 des Trichters 11 sowie das Auftreffen des Volumenstromes auf die Streuscheibe 12 entweder an zwei vorgegebenen Stellen oder wahlweise an einer der beiden Stellen durch eine entsprechende Gestaltung der die Dosier- und Richtungsstelleinrichtung bildenden Platte 17. Zusätzlich oder alternativ kann auch das Schließblech 18 zur Dosierung des Volumenstromes verwendet werden.

## Patentansprüche

1. Kleinschlepper, insbesondere Rasentraktor, der an der Frontseite mittels einer Kupplungsvorrichtung mit einem Streugerät (10) gekuppelt ist, welches mit einem Trichter (11) zur Aufnahme des Streugutes, einer unterhalb des Trichters um eine vertikale Achse rotierend antreibbaren Streuscheibe (12) und einer oberhalb der Streuscheibe (12) liegenden Dosier- oder Richtungsstelleinrichtung für das Streugut ausgerüstet ist, **dadurch gekennzeichnet, dass** der Trichter (11) des Streugerätes (10) zwei außerhalb der Drehachse der Streuscheibe (12) liegende Auslauföffnungen (15, 16) aufweist, dass die Dosier- und Richtungsstelleinrichtung aus einer oberhalb der Streuscheibe (12) liegenden schwenkbaren Platte (17) besteht, die um eine außerhalb der Drehachse (33) der Streuscheibe (12) liegende Achse (19) schwenkbar und mit Bohrungen (22 bis 25) versehen ist, die wahlweise in eine korrespondierende Stellung zu einer der beiden oder zu beiden Auslauföffnungen (15, 16) bringbar sind.

2. Kleinschlepper nach Anspruch 1, **dadurch gekennzeichnet, dass** die Auslauföffnungen (15, 16) des Trichters (11) auf einem zur Drehachse (33) der Streuscheibe (12) konzentrischen Kreisbogen im Winkelabstand zueinander liegen, und dass die Platte (17) mit vier auf einem entsprechenden Kreisbogen im Winkelabstand zueinander stehenden Bohrungen (22 bis 25) versehen ist.

3. Kleinschlepper nach Anspruch 2, **dadurch gekennzeichnet, dass** die Platte (17) segmentförmig gestaltet ist und dass die mittleren Bohrungen (23, 24) im gleichen Winkelabstand zueinander stehen wie die Auslauföffnungen (15, 16) des Bodens (14) des Trichters (11)

4. Kleinschlepper nach Anspruch 3, **dadurch gekennzeichnet, dass** die Abstände der beiden äußeren Bohrungen (22, 25) der Platte (17) zu den zugewandten mittleren Bohrungen (23, 24) geringer sind als der Abstand der beiden mittleren Bohrungen (23, 24) untereinander.

5. Kleinschlepper nach einem oder mehreren der vorhergehenden Ansprüche 1 bis 4, **dadurch gekennzeichnet, dass** zwischen der als Platte (17) ausgebildeten Dosier- und Richtungsstelleinrichtung ein Schließblech (18) beweglich gelagert ist.

6. Kleinschlepper nach Anspruch 5, **dadurch gekennzeichnet, dass** das Schließblech (18) um eine zur Schwenkachse (19) der Platte (17) fluchtende Achse schwenkbar ist.

7. Kleinschlepper nach Anspruch 5 oder 6, **dadurch gekennzeichnet, dass** das Schließblech (18) mit zwei Bohrungen oder Löchern (28, 29) versehen ist, die auf einem dem Kreisbogen für die Bohrungen (22, 25) entsprechenden Kreisbogen liegen und im gleichen Winkelabstand zueinander stehen wie die Auslauföffnungen (15, 16).

8. Kleinschlepper nach einem oder mehreren der vorhergehenden Ansprüche 1 bis 7, **dadurch gekennzeichnet, dass** das Streugerät (10) mittels der Kupplungsvorrichtung in eine angehobene Ruhestellung und in eine abgesenkte Streustellung bringbar ist und dass das Schließblech (18) mit der Kupplungsvorrichtung derart verbunden ist, dass bei angehobenem Streugerät (10) das Schließblech (18) die Auslauföffnungen (15, 16) des Bodens (14) des Trichters (11) verschließt und in der abgesenkten Betriebsstellung die Auslauföffnungen (15, 16) frei gibt.

9. Kleinschlepper nach einem oder mehreren der vorhergehenden Ansprüche 1 bis 8, **dadurch gekennzeichnet, dass** die Kupplungsvorrichtung als Gelenkkette ausgebildet und das an einem Lenker eine Koppelstange angelenkt ist, deren anderes Ende an dem Schließblech (18) außerhalb seiner Schwenkachse (19) angeschlossen ist.

10. Kleinschlepper nach Anspruch 9, **dadurch gekennzeichnet, dass** die Länge der Koppelstange derart einstellbar ist, dass in der abgesenkten Streustellung des Streugerätes (10) ein bestimmter Querschnitt der Auslauföffnungen (15, 16) des Bodens (14) des Trichters (11) zur Dosierung des Streugutes freigegeben ist.

11. Kleinschlepper nach einem oder mehreren der vorhergehenden Ansprüche 1 bis 10, **dadurch gekennzeichnet, dass** die Streuscheibe (12) mittels eines Riementriebes antreibbar ist, der in der angehobenen Außerbetriebsstellung des Streugerätes (10) entspannt und in der abgesenkten Streustellung gespannt ist.

## Claims

1. Compact tractor, in particular lawn tractor, which is coupled on the front side, by means of a coupling arrangement, to a distributing unit (10), which is equipped with a hopper (11) for accommodating the material which is to be distributed, with a distributing disc (12) which can be driven in rotation, about a vertical axis, beneath the hopper, and with a dosing or direction-adjusting device for the material which is to be distributed, this device being located above the distributing disc (12), **characterized in that** the hopper (11) of the distributing unit (10) has two outlet openings (15, 16) located outside the axis of rotation of the distributing disc (12), and **in that** the dosing and direction-adjusting device comprises a pivotable plate (17) which is located above the distributing disc (12), can be pivoted about an axis (19) located outside the axis of rotation (33) of the distributing disc (12), and is provided with bores (22 to 25), which can optionally be moved into a position corresponding to one or both of the outlet openings (15, 16).

2. Compact tractor according to Claim 1, **characterized in that** the outlet openings (15, 16) of the hopper (11) are located at an angular distance apart from one another on a circle arc which is concentric with the axis of rotation (33) of the distributing disc (12), and **in that** the plate (17) is provided with four bores (22 to 25), which are located at an angular distance apart from one another on a corresponding circle arc.

3. Compact tractor according to Claim 2, **characterized in that** the plate (17) is of segment-like configuration, and **in that** the central bores (23, 24) are located at the same angular distance apart from one another as the outlet openings (15, 16) in the base (14) of the hopper (11).

4. Compact tractor according to Claim 3, **characterized in that** the distances between the two outer bores (22, 25) of the plate (17) and the central bores (23, 24) facing them are smaller than the distance between the two central bores (23, 24).

5. Compact tractor according to one or more of the preceding claims, Claims 1 to 4, **characterized in that** a closing plate (18) is mounted in a movable manner between the dosing and direction-adjusting device formed as the plate (17).

6. Compact tractor according to Claim 5, **characterized in that** the closing plate (18) can be pivoted about an axis which is aligned with the pivot axis (19) of the plate (17).

7. Compact tractor according to Claim 5 or 6, **characterized in that** the closing plate (18) is provided with two bores or holes (28, 29) which are located on a circle arc corresponding to the circle arc for the bores (22, 25) and are located at the same angular distance apart from one another as the outlet openings (15, 16).

8. Compact tractor according to one or more of the preceding claims, Claims 1 to 7, **characterized in that** the distributing unit (10) can be moved, by means of the coupling arrangement, into a raised, rest position and into a lowered, distributing position, and **in that** the closing plate (18) is connected to the coupling arrangement such that, when the distributing unit (10) is raised, the closing plate (18) closes the outlet openings (15, 16) in the base (14) of the hopper (11) and, when the distributing unit is in the lowered, operating position, the closing plate releases the outlet openings (15, 16).

9. Compact tractor according to one or more of the preceding claims, Claims 1 to 8, **characterized in that** the coupling arrangement is designed as a link chain, and **in that** a connecting rod is articulated on one link, the other end of this connecting rod being connected to the closing plate (18), outside its pivot axis (19).

10. Compact tractor according to Claim 9, **characterized in that** the length of the connecting rod can be adjusted such that, in the lowered, distributing position of the distributing unit (10), a certain cross section of the outlet openings (15, 16) in the base (14) of the hopper (11) is released for the purpose of dosing the material which is to be distributed.

11. Compact tractor according to one or more of the preceding claims, Claims 1 to 10, **characterized in that** the distributing disc (12) can be driven by means of a drive belt which, in the raised, non-operational position of the distributing unit (10), is relieved of tensioning and, in the lowered, distributing position, is tensioned.

## Revendications

1. Petit tracteur, en particulier tracteur-tondeuse, qui est couplé sur son côté frontal, au moyen d'un dispositif d'accouplement, à un appareil d'épandage (10) qui est équipé d'une trémie (11) pour recevoir le produit à épandre, d'un disque d'épandage (12) pouvant être entraîné en rotation autour d'un axe vertical, au-dessous de la trémie, et d'un dispositif de dosage ou de réglage de la direction pour le produit à épandre, situé au-dessus du disque d'épandage (12), **caractérisé en ce que** la trémie (11) de l'appareil d'épandage (10) comporte deux ouvertures de sortie (15; 16) situées à l'extérieur de l'axe de rotation du disque d'épandage (12), **en ce que** le dispositif de dosage et de réglage de la direction est constitué d'une plaque (17) pivotante située au-dessus du disque d'épandage (12), laquelle peut pivoter autour d'un axe (19) situé à l'extérieur de l'axe de rotation (33) du disque d'épandage (12), et est pourvue de perçages (22 à 25) qui peuvent être amenés au choix dans une position correspondant à l'une ou aux deux ouvertures de sortie (15 ; 16).

2. Petit tracteur selon la revendication 1, **caractérisé en ce que** les ouvertures de sortie (15; 16) de la trémie (11) se situent, à distance angulaire les unes des autres, sur un arc de cercle concentrique à l'axe de rotation (33) du disque d'épandage (12), et **en ce que** la plaque (17) est pourvue de quatre perçages (22 à 25) se trouvant à distance angulaire les uns des autres sur un arc de cercle correspondant.

3. Petit tracteur selon la revendication 2, **caractérisé en ce que** la plaque (17) est en forme de segment et **en ce que** les perçages centraux (23; 24) se trouvent à même distance angulaire les uns des autres que les ouvertures de sortie (15 ; 16) du fond (14) de la trémie (11).

4. Petit tracteur selon la revendication 3, **caractérisé en ce que** les distances des deux perçages extérieurs (22; 27) de la plaque (17) par rapport aux perçages centraux (23; 24) tournés vers ceux-ci sont inférieures à l'écartement des deux perçages centraux (23 ; 24).

5. Petit tracteur selon une ou plusieurs des revendications précédentes 1 à 4, **caractérisé en ce qu'**une tôle de fermeture (18) est montée déplaçable entre le dispositif de dosage et de réglage de direction réalisé sous forme de la plaque (17).

6. Petit tracteur selon la revendication 5, **caractérisé en ce que** la tôle de fermeture (18) peut pivoter autour d'un axe aligné avec l'axe de pivotement (19) de la plaque (17).

7. Petit tracteur selon la revendication 5 ou 6, **caractérisé en ce que** la tôle de fermeture (18) est pourvue de deux perçages ou trous (28 ; 29) qui se situent sur un arc de cercle correspondant à l'arc de cercle des perçages (22 ; 25), et qui se situent à même distance angulaire les uns des autres que les ouvertures de sortie (15, 16).

8. Petit tracteur selon l'une ou plusieurs des revendications précédentes 1 à 7, **caractérisé en ce que** l'appareil d'épandage (10) peut être amené au moyen du dispositif d'accouplement dans une position de repos relevée et dans une position d'épandage abaissée et **en ce que** la tôle de fermeture (18) est reliée au dispositif d'accouplement, de manière que lorsque l'appareil d'épandage (10) est relevé, la tôle de fermeture (18) ferme les ouvertures de sortie (15, 16) du fond (14) de la trémie (11) et, dans la position de fonctionnement abaissée, elle dégage les ouvertures de sortie (15, 16).

9. Petit tracteur selon une ou plusieurs des revendications 1 à 8 précédentes, **caractérisé en ce que** le dispositif d'accouplement est réalisé comme chaîne articulée et **en ce qu'**à un bras oscillant est articulée une barre d'accouplement dont l'autre extrémité est raccordée à la tôle de fermeture (18) à l'extérieur de son axe de pivotement (19).

10. Petit tracteur selon la revendication 9, **caractérisé en ce que** la longueur de la barre d'accouplement est réglable de manière qu'en position abaissée d'épandage de l'appareil d'épandage (10), une section déterminée des ouvertures de sortie (15, 16) du fond (14) de la trémie (11) soit dégagée pour le dosage du produit à épandre.

11. Petit tracteur selon une ou plusieurs des revendications précédentes 1 à 10, **caractérisé en ce que** le disque d'épandage (12) peut être entraîné au moyen d'une transmission à courroie qui, en position hors service relevée de l'appareil d'épandage (10), est desserrée et, en position abaissée d'épandage est serrée.
